# EUROPEAN PATENT SPECIFICATION

(11) **EP 4 224 585 B1**
(45) Date of publication and mention of the grant of the patent: **13.05.2026**
(21) Application number: 22881327.5
(22) Date of filing: 12.10.2022
(51) Int. Cl.: H01M 10/04, H01M 10/0525, H01M 50/105, H01M 50/119, H01M 10/052, H01M 50/178, H01M 10/0585, H01M 10/0587, H01M 50/595, H01M 50/586

(54) **ELECTRODE ASSEMBLY**
ELEKTRODENANORDNUNG
ENSEMBLE ÉLECTRODE

(30) Priority: 12.10.2021 KR 20210134888; 11.10.2022 KR 20220129405
(43) Date of publication of application: 09.08.2023
(73) Proprietor: LG Energy Solution, Ltd., Seoul 07335 (KR)
(72) Inventor: KWON, Myung Bin, Daejeon 34122 (KR)
(74) Representative: Plasseraud IP
(86) International application number: PCT/KR2022/015339
(87) International publication number: WO 2023/063700

(56) References cited:
- EP-A1- 1 202 371
- EP-A1- 2 416 432
- JP-A- 2003 187 873
- KR-A- 20030 096 717
- KR-A- 20160 051 647
- KR-A- 20170 103 485
- KR-A- 20200 102 261

## Description

### [Technical Field]

The present application claims the benefit of priority based on Korean Patent Application Nos. 10-2021-0134888 filed on October 12, 2021, and 10-2022-0129405 filed on October 11, 2022.

The present invention relates to an electrode assembly comprising a protective block.

### [Background Art]

With the development of portable electronic devices such as mobile phones and laptop computers, the demand for secondary batteries as an energy source thereof has increased rapidly. In recent years, the use of secondary batteries as power sources for hybrid electric vehicles (HEV) and electric vehicles (EV) has been actualized. Therefore, many studies have been conducted on secondary batteries that can fulfill various demands. In particular, the demand for lithium secondary batteries with high energy density, high discharge voltage and output are increasing.

However, the lithium secondary battery has a problem of basically low safety. During the use of the secondary battery, if a defect such as short circuit occurs in a local part of battery elements, it may cause phenomena such as an internal temperature rise and gas generation, and the form of the internal elements such as electrodes may be deformed due to the temperature rise and the generated gas. Such a form deformation may accelerate the occurrence of additional short circuit, and the likelihood of battery ignition due to short circuit also increases.

The lithium secondary battery includes an electrode assembly in which a positive electrode and a negative electrode each coated with a positive electrode active material and a negative electrode active material are disposed with a separator interposed therebetween, and a battery case as an external package that seals and houses the electrode assembly together with an electrolytic solution.

The electrode assembly consisting of an electrode laminate having a positive electrode/separator/negative electrode structure, which constitutes the lithium secondary battery, may be classified into a jelly-roll type (wound type), a stack type (laminated type), and a stack/folding type that is a mixture form thereof.

The jelly-roll type electrode assembly is manufactured by coating a metal foil used as a current collector with an electrode active material or the like, drying and pressing the metal foil, cutting it into a band shape of a desired width and length, separating the positive electrode and the negative electrode using the separator, and then, rolling it spirally. The jelly-roll type electrode assembly is suitable for a cylindrical battery.

The stack type or stack/folding type electrode assembly has a structure in which positive electrode and negative electrode units are sequentially stacked with the separator interposed therebetween in the electrode laminate, and it is easy to obtain a prismatic shape.

The stack type or stack/folding type lithium secondary battery can be obtained by a method in which mono cells having a positive electrode/separator/negative electrode/separator structure are stacked repeatedly or folded using a continuous separator, or a method in which the positive electrode is added above and below half cells of the separator/negative electrode/separator structure.

On the other hand, in the stack type or stack/folding type lithium secondary batteries, low-voltage defective cells in which the battery exhibits voltage drop behavior higher than self-discharge rate are sometimes found. The main cause of the low-voltage failure is that corner portions of the separator are folded or torn during the assembly process, so that the positive electrode and negative electrode directly face each other and thus are electrically short-circuited. Accordingly, it is necessary to develop an electrode assembly that can solve the above problem.

### [Prior Art Document]

Korean Patent Application No. 10-2018-0081926
EP 2 416 432 A1 relates to secondary battery,
EP 1 202 371 A1 relates to a flexible laminate casing,
KR 1020200102261 A relates to a pouch-type secondary battery comprising deformation preventing structure,
KR 1020160051647 A relates to a method for manufacturing a secondary battery and the secondary battery,
KR 1020170103485 A relates to electrode assembly for electrochemical device.

### [Disclosure]

### [Technical Problem]

As a result of multi-modal studies to solve the above problem, it was confirmed that a phenomenon in which the separator is folded or torn does not occur when the edge portions of the electrode laminate are surrounded with a protective block consisting of a first protective panel and a second protective panel extending vertically from one longitudinal side of the first protective panel.

Accordingly, an object of the present invention is to provide an electrode assembly that does not cause separator damage.

### [Technical Solution]

In order to achieve the above object, the present invention provides an electrode assembly as described in the attached set of claims, comprising:
an electrode laminate;
a protective block that wraps edge portions of the electrode laminate; and
a fixing tape that is wound around an outer surface of the electrode laminate and an outer surface of the protective block in a full width direction or a full length direction,
wherein the protective block is made up of a first protective panel and a second protective panel extending vertically from one longitudinal side of the first protective panel.

According to the present invention, the protective block
a) wraps around the edge portions in the full length direction of the electrode laminate,
b) wraps around the edge portions in the full width direction except for an electrode tab of the electrode laminate, or
c) wraps around the edge portions in the full length direction of the electrode laminate and in the full width direction except for the electrode tab.

According to the present invention, a) four protective blocks wrap around the edge portions in the full length direction of the electrode laminate, and is provided at each of the edge portions in the full length direction of the electrode laminate.

According to the present invention, b) four protective blocks wrap around the edge portions in the full width direction of the electrode laminate except for the electrode tab, and is provided at each of the edge portions in the full width direction of the electrode laminate.

According to the present invention, c) four protective blocks wrap around the edge portions in the full length direction of the electrode laminate and four protective blocks wrap around the edge portions in the full width direction except for the electrode tab, which is provided at each of the edge portions in the full length direction and the full width direction of the electrode laminate.

According to the present invention, each of the protective blocks has a separation distance from an adjacent protective block.

In an embodiment of the invention, the protective block may be manufactured from one or more materials selected from a group consisting of polyethylene, polypropylene, polyvinylidene difluoride, polyethylene terephthalate, polyimide, ethylene vinyl acetate, and an acrylate compound.

In an embodiment of the invention, the fixing tape may be provided at a plurality of positions, and may be located to be spaced apart from each other.

In an embodiment of the present invention, the fixing tape may be wound around the outer surface of the electrode laminate and the outer surface of the protective block by one or more turns in the full width direction.

In an embodiment of the present invention, a plurality of the fixing tapes may be fixed at symmetrical positions on the basis of a full-width line on a midpoint in the full length direction of the electrode assembly.

In an embodiment of the present invention, the fixing tape may be wound around the outer surface of the electrode laminate and the outer surface of the protective block by one or more turns in the full-length direction.

In an embodiment of the present invention, a plurality of fixing tapes may be fixed at symmetrical positions on the basis of a full-length line on a midpoint in the full width direction of the electrode assembly.

In an embodiment of the present invention, the electrode laminate may have a separator interposed between a positive electrode and a negative electrode, and a length in the full length direction of the electrode laminate may be relatively longer than a length in the full width direction orthogonal to the full length direction.

### [Advantageous Effects]

The electrode assembly of the present invention may have an effect capable of preventing a phenomenon in which the separator is folded, by including a) an edge portion in a full length direction of an electrode laminate, b) an edge portion in a full width direction of an electrode laminate, or c) a protective block including a first protective panel and second protective panel extending in a vertical direction from one longitudinal side of the first protective panel in each of the edge portions in a full length direction and a full width direction.

In addition, by preventing a folding phenomenon of the separator, it is possible to solve the problem of battery short circuit that may occur due to the separator folding.

### [Description of Drawings]

FIG. 1 is a perspective view of an electrode assembly according to an embodiment of the present invention.
FIG. 2 is a front view of the electrode assembly according to an embodiment of the invention.
FIG. 3 is a perspective view of an electrode assembly according to another embodiment of the invention.
FIG. 4 is a perspective view of an electrode assembly according to another embodiment of the invention.
FIG. 5 is a perspective view of a conventional electrode assembly.
FIG. 6 is a photograph showing a state in which the separator is folded in the conventional electrode assembly.
FIG. 7 is a front view of an electrode assembly 200 including another form of a protective block 220.

### [Best Mode]

Hereinafter, the present invention will be described in detail with reference to the accompanying drawings so that a person having ordinary knowledge in the art to which the present invention pertains can easily carry it out. The present invention may, however, be embodied in many different forms, and is not limited to the embodiments set forth herein.

In order to clearly describe the present invention, parts irrelevant to the description are omitted, and the same or similar components are denoted by the same reference numerals throughout the specification.

Furthermore, the terms or words used in the specification and claims should be interpreted not as being limited to usual or dictionary meaning, but as a meaning and concept consistent with the technical idea of the present invention on the basis of a principle that the inventors may properly define the concept of the term to describe their invention in the best possible manner.

Hereinafter, the embodiments will be described in detail with reference to the accompanying drawings. The present invention may, however, be embodied in many different forms and is not limited to the embodiments set forth herein.

The present invention relates to an electrode assembly, the electrode assembly 100 of the present invention comprises:
an electrode laminate 110;
a protective block 120 that wraps around the edge portion of the electrode laminate 110; and
a fixing tape 130 wound around the outer surface of the electrode laminate 110 and the outer surface of the protective block 120 in a full width direction or a full length direction,
wherein the protective block 120 is made up of a first protective panel 121 and a second protective panel 122 extending vertically from one longitudinal side of the first protective panel 121.

The protective block 120 that wraps around the edge portion of the electrode laminate 110
a) wraps around the edge portions in the full length direction y of the electrode laminate 110,
b) wraps around the edge portions in a full width direction x except for electrode tabs 111a and 112a of the electrode laminate 110, or
c) wraps around the edge portions in the full length direction y of the electrode laminate 110 and in the full width direction x except for the electrode tabs 111a and 112a.

The protective block 120 is made up of a first protective panel 121, and a second protective panel 122 extending vertically from one longitudinal side of the first protective panel 121.

Specifically, for example, the protective block 120 may have a 'L'-like shape.

Also, the first protective panel 121 and the second protective panel 122 may be a square-like shape.

Also, the protective block 120 may be an insulating material having high strength, for example, specifically a block made of at least one material selected from the group consisting of polyethylene, polypropylene, polyvinylidene difluoride, polyethylene terephthalate, polyimide, ethylene vinyl acetate, and acrylate compounds.

The fixing tape 130 may serve to hold the shape of the electrode assembly 100 so as not to be deformed, and may be provided at a plurality of positions and located to be spaced apart from each other.

In an embodiment of the present invention, the fixing tape 130 may be wound around the outer surface of the electrode laminate 110 and the outer surface of the protective block 120 in the full width direction x by one or more turns.

Also, a plurality of the fixing tapes 130 may be fixed at symmetrical positions on the basis of a full width line on a midpoint in the full length direction y of the electrode assembly 100.

The number of fixing tapes 130 may be preferably three to five.

In another embodiment of the present invention, the fixing tape 130 may be wound around the outer surface of the electrode laminate 110 and the outer surface of the protective block 120 in the full length direction y by one or more turns.

In addition, a plurality of the fixing tapes 130 may be fixed at symmetrical positions on the basis of a full length line on a midpoint in the full width direction x of the electrode assembly 100.

The number of fixing tapes 130 may preferably be two to four.

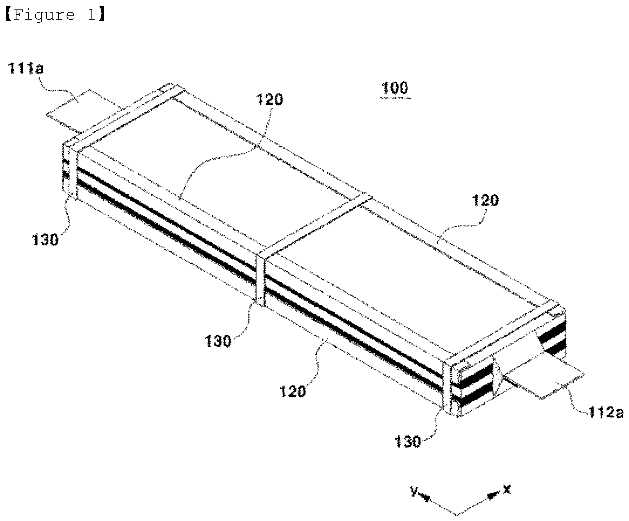

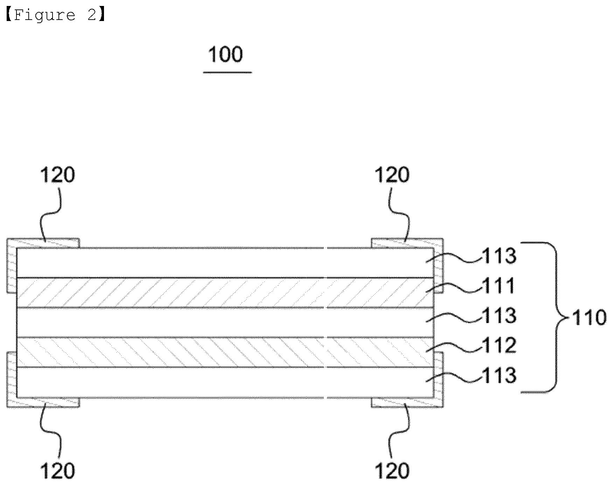

FIG. 1 is a perspective view of an electrode assembly according to an embodiment of the present invention, and FIG. 2 is a front view of the electrode assembly according to an embodiment of the present invention.

Referring to FIGS. 1 and 2, an electrode assembly 100 according to an embodiment of the present invention comprises: an electrode laminate 110; a protective block 120 which wraps around the edge portion in the full length direction y of the electrode laminate 110; and a fixing tape 130 wound around the outer surface of the electrode laminate 110 and the outer surface of the protective block 120 in the full width direction x.

The number of the protective blocks 120 may be four, and one protective block 120 may be provided at each of edge portions in the full length direction y of the electrode laminate 110. Additionally, the protective block 120 has a separation distance from an adjacent protective block.

An area of the electrode assembly 100 that is covered with the protective block 120 is not particularly limited, and may be, for example, covered by 30 to 70% of the total surface area of the outer circumferential surface in the full length direction y of the electrode assembly 100.

Although the fixing tape 130 may also be wound around the outer surface of the electrode laminate 110 and the outer surface of the protective block 120 in the full length direction y, it may be preferably wound around the outer surface of the electrode laminate 110 and the outer surface of the protective block 120 in the full width direction x when the protective block 120 wraps around the edge portion in the full length direction y.

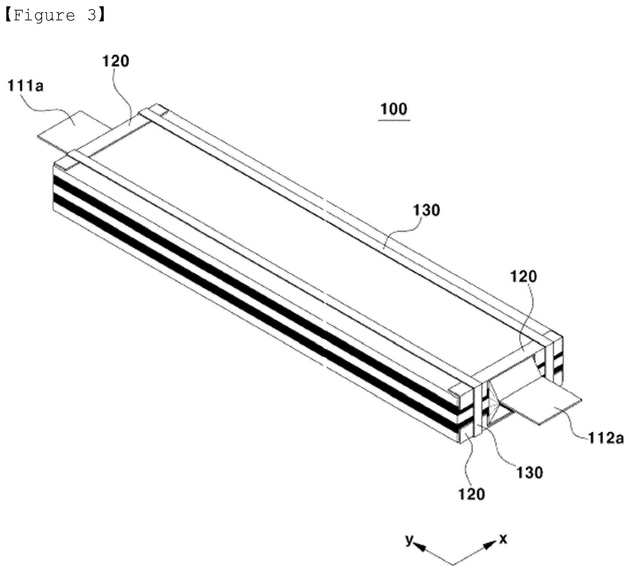

FIG. 3 is a perspective view of an electrode assembly according to another embodiment of the present invention.

Referring to FIG. 3, the electrode assembly 100 according to the present invention comprises: an electrode laminate 110; a protective block 120 that wraps around the edge portion in the full width direction x of the electrode laminate 110 except for the electrode tabs 111a and 112a; and a fixing tape 130 wound around the outer surface of the electrode laminate 110 and the outer surface of the protective block 120 in the full length direction y.

The number of the protective blocks 120 is four, and one protective block is provided at each of the edge portions in the full width direction x of the electrode laminate 110 except for the electrode tabs 111a and 112a. Additionally, the protective block 120 has a separation distance from an adjacent protective block.

Since the electrode tabs 111a and 112a may be disconnected when the protective block 120 wraps around the full edge portions in the full width direction x, the protective block 120 wraps around the edge portion in the full width direction x except for the electrode tabs 111a and 112a. The protective blocks 120 provided at each edge portion in the full width direction x except for the electrode tabs 111a and 112a may be blocks in which the second protective panel 122 extending vertically from one side of the first protective panel 121 in the longitudinal direction is extended from a portion except for the electrode tabs 111a and 112a.

The area covered with the protective block 120 in the electrode assembly 100 is not particularly limited, and may be covered by, for example, 30 to 70% of the total surface area of the outer peripheral surface in the full width direction x of the electrode assembly 100.

The fixing tape 130 can be wound around the outer surface of the electrode laminate 110 and the outer surface of the protective block 120 in the full width direction x. However, when the protective block 120 wraps around the edge portions in the full width direction x, the fixing tape 130 may be preferably wound around the outer surface of the electrode laminate 110 and the outer surface of the protective block 120 in the full length direction y.

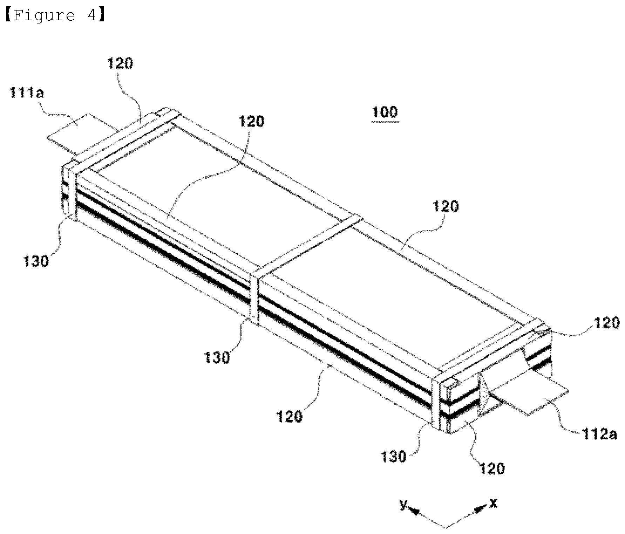

FIG. 4 is a perspective view of an electrode assembly according to another embodiment of the present invention.

Referring to FIG. 4, the electrode assembly 100 according to the present invention comprises: an electrode laminate 110; a protective block 120 that wraps around the edge portions of the electrode laminate 110 in the full length direction y and in the full width direction x except for the electrode tabs 111a and 112a; and a plurality of fixing tapes 130 wound around the outer surface of the electrode laminate 110 and the outer surface of the protective block 120 in the full width direction x.

The number of the protective blocks 120 is eight, specifically, four protective blocks may be provided by one at each edge portion in the full length direction y of the electrode laminate 110, and four blocks may be provided by one at each of the edge portions in the full width direction x except for the electrode tabs 111a and 112a. Additionally, the protective block 120 has a separation distance from an adjacent protective block.

Since the electrode tabs 111a and 112a may be disconnected when the protective block 120 wraps around the full edge portions in the full width direction x, the protective block 120 wraps around the edge portions in the full width direction x except for the electrode tabs 111a and 112a. The protective blocks 120 provided at each of the edge portions in the full width direction x except for the electrode tabs 111a and 112a may be blocks in which the second protective panel 122 extending vertically from one side of the first protective panel 121 in the longitudinal direction is extended from a portion except the electrode tabs 111a and 112a.

The area covered with the protective block 120 in the electrode assembly 100 is not particularly limited, and may be covered by, for example, 30 to 70% of the total surface area of the outer circumferential surface of the electrode assembly 100 in the full width direction x and the full length direction y.

The fixing tape 130 may be wound around the outer surface of the electrode laminate 110 and the outer surface of the protective block 120 in the full length direction y. However, when the protective block 120 wraps around the edge portions in the full width direction x and the full length direction y, the fixing tape 130 may be preferably wound around the outer surface of the electrode laminate 110 and the outer surface of the protective block 120 in the full width direction x.

Since the electrode assembly 100 of the present invention comprises the protective block 120 as described above, the ends of the separator 113 can be prevented from being exposed to the outside. Therefore, it is possible to prevent a phenomenon in which the separator is folded by an external force due to injection of electrolytic solution or the like, thereby solving the problem such as battery short circuit. Also, the electrode assembly 100 can be protected from external impact.

The protective block 120 may most effectively prevent a phenomenon in which the separator is folded c) when the protective block wraps around the edge portion in the full length direction y of the electrode laminate 110 and in the full width direction x except for the electrode tabs 111a and 112a. In addition, the protective block 120 may have better effect a) when the protective block wraps around the edge portion in the full length direction y of the electrode laminate 110 than b) when the protective block wraps around the edge portions in the full width direction x of the electrode laminate 110 except for the electrode tabs 111a and 112a. That is, as the area covered with the protective block 120 is large, it is possible to more effectively prevent the folding phenomenon of the separator due to the external force.

The electrode laminate 110 may have a form in which a separator 113 is interposed between a positive electrode 111 and a negative electrode 112 and the length in the full length direction y of the electrode laminate 110 is relatively longer than the length in the full width direction x orthogonal to the full length direction y.

Also, the electrode laminate 110 may be a stack type electrode laminate 110 having a plurality of unit cells in which the separator 113 is interposed between the positive electrode 111 and the negative electrode 112. Alternatively, it may also be an electrode laminate 110 in which an outermost layer of the electrode laminate 110 is made of a separator. In addition, a lamination/stack type electrode laminate that laminates multiple unit cells may also be used, and the structure of the electrode laminate 110 is applicable to all the electrode laminate 110 described herein.

The positive electrode 111 may include a positive electrode tab 111a, and the negative electrode 112 may include a negative electrode tab 112a.

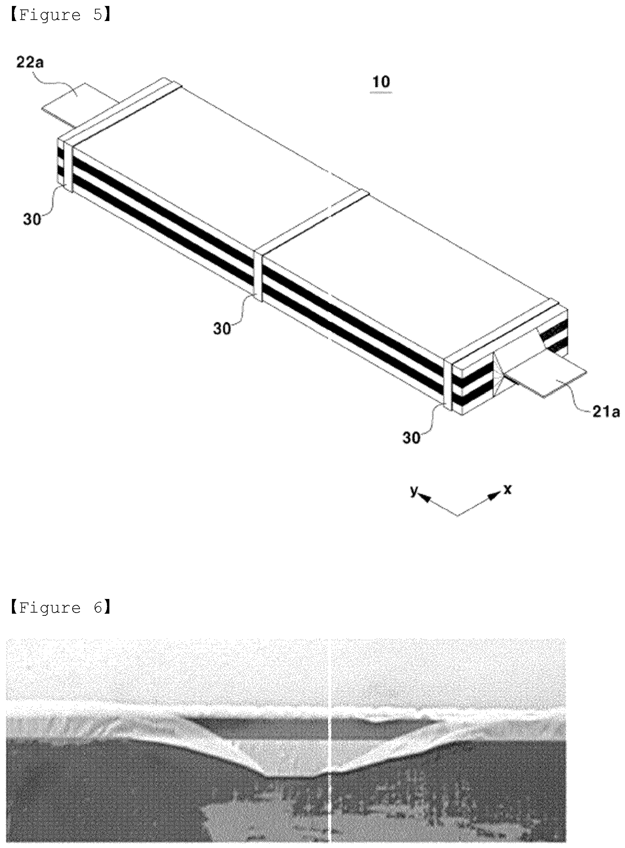

FIG. 5 is a perspective view of a conventional electrode assembly.

Referring to FIG. 5, the conventional electrode assembly 10 includes an electrode laminate 20 and a fixing tape 30 wound around the outer surface of the electrode laminate 20 in the full width direction x.

The electrode laminate 20 and the fixing tape 30 may be the same as the present invention described above.

Since the conventional electrode assembly 100 does not include a protective block that wraps around the edge portions of the electrode laminate in the full length direction, the separator is exposed to the outside.

In general, the electrode assembly is subject to external forces in all directions and at this time, regions other than the region wound with a plurality of fixing tapes are vulnerable to external forces. In particular, the ends of the separator are more vulnerable to external forces, and thus a phenomenon in which the separator is folded occurs even a small external force.

However, the electrode assembly 100 according to an embodiment of the present invention includes a protective block 120 consisting of a first protective panel 121 and a second protective panel 122 extending vertically from one longitudinal side of the first protective panel, wherein the protective block 120 is provided at a) the edge portion in the full length direction y, b) the edge portion in the full width direction x, or c) each of the edge portions in the full length direction y and the full width direction x of the electrode laminate 110. Accordingly, the separator may not be exposed to the outside, thereby solving the problem that the separator is folded due to external force as described above.

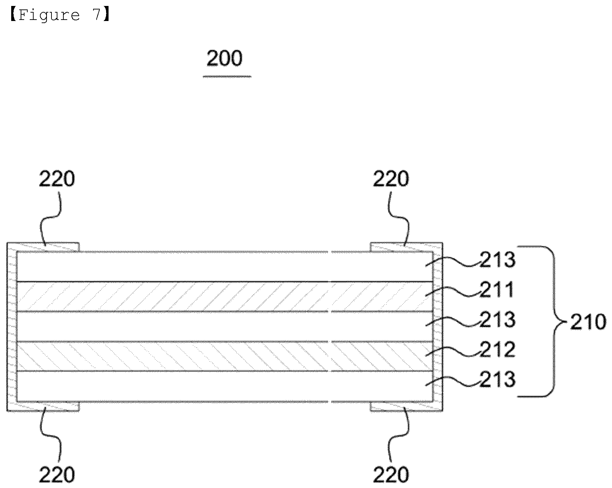

FIG. 7 is a front view of an electrode assembly 200 including the protective block 220 that wraps around the edge portion in the full length direction y and side surfaces of the electrode laminate 210.

Referring to FIG. 7, the protective block 220 may be made up of a square panel 221 and two extensions 222 obtained by extending both longitudinal end portions of the square panel 221 perpendicularly to the square panel 221 in the same direction.

For example, the protective block 220 may have a ' 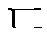 ' -like shape.

Additionally, the two extensions 222 may have a square-like shape.

When the electrode laminate 210 is inserted into the protective block 220 and the internal height of the protective block 220 is not sufficient during the insertion process, the separator 213 may be folded, or the negative electrode 212 or the positive electrode 211 may be damaged by an external force. In addition, if the inner height of the protective block 220 is higher than the height of the electrode laminate 210, the electrode laminate 210 may move inside the protective block 220 and thus may be damaged.

However, the electrode assembly 100 according to an embodiment of the present invention comprises the protective block 120 consisting of the first protective panel 121 and the second protective panel 122 extending vertically from one longitudinal side of the first protective panel at a) the edge portion in the full length direction y of the electrode laminate 110, b) the edge portion in the full width direction x except for the electrode tabs 111a and 112a, or c) each edge portion in the full length direction y and in the full width direction x except for the electrode tabs 111a and 112a, wherein the protective block 120 has a separation distance from the adjacent protective block. Therefore, as described above, the problem occurring in the protective block 220 shown in FIG. 7 may be resolved.

That is, the electrode assembly 100 according to an embodiment of the present invention does not cause the phenomenon that separator 113 is folded, thereby solving the problem such as battery short circuit.

Although the present invention has been described with reference to the limited examples and drawings, it will be understood by the person skilled in the art that the present invention is not limited thereto and various modifications and variations may be made within the scope of the claims set forth below.

**[Description of symbols]**

| | | | |
|---|---|---|---|
| 10, 100, 200: | Electrode assembly | | |
| 20, 110, 210: | Electrode laminate | | |
| 111, 211: | Positive electrode | | |
| 21a, 111a: | Positive electrode tab | | |
| 112, 212: | Negative electrode | | |
| 22a, 112a: | Negative electrode tab | | |
| 113, 213: | Separator, | 120, 220: | Protective block |
| 121: | First protective panel, | 122: | Second protective panel |
| 30, 130: | Fixing tape, | 221: | Square panel |
| 222: | Extension | | |

## Claims

1. An electrode assembly (10, 100, 200), comprising:
an electrode laminate (20, 110, 210);
protective blocks (120, 220) that wrap around an edge portion of the electrode laminate (20, 110, 210); and
a fixing tape (30, 130) that is wound around an outer surface of the electrode laminate (20, 110, 210) and an outer surface of the protective block (120, 220) in a full width direction or a full length direction,
wherein the protective block (120, 220) is made up of a first protective panel, and a second protective panel extending vertically from one longitudinal side of the first protective panel,
wherein
a) four protective blocks (120, 220) wrap around the edge portions of the electrode laminate (20, 110, 210) in the full length direction, and are provided at each of the edge portions in the full length direction of the electrode laminate (20, 110, 210), wherein each of the protective blocks has a separation distance from an adjacent protective block, or
b) four protective blocks (120, 220) wrap around the edge portions in the full width direction of the electrode laminate (20, 110, 210) except for an electrode tab (21a, 111a, 22a, 112a), and are provided at each of the edge portions in the full width direction of the electrode laminate (20, 110, 210), wherein each of the protective blocks has a separation distance from an adjacent protective block, or
c) four protective blocks (120, 220) wrap around the edge portions in the full length direction of the electrode laminate (20, 110, 210) and four protective blocks (120, 220) wrap around the edge portions in the full width direction except for the electrode tab (21a, 111a, 22a, 112a), and are provided at each of the edge portions in the full length direction and the full width direction of the electrode laminate (20, 110, 210), wherein each of the protective blocks has a separation distance from an adjacent protective block.

2. The electrode assembly (10, 100, 200) according to claim 1,
wherein the protective block (120, 220) is manufactured from at least one material selected from the group consisting of polyethylene, polypropylene, polyvinylidene difluoride, polyethylene terephthalate, polyimide, ethylene vinyl acetate, and acrylate compounds.

3. The electrode assembly (10, 100, 200) according to claim 1,
wherein the fixing tapes (30, 130) are provided at a plurality of positions, and are located to be spaced apart from each other.

4. The electrode assembly (10, 100, 200) according to claim 1,
wherein the fixing tape (30, 130) is wound around the outer surface of the electrode laminate (20, 110, 210) and the outer surface of the protective block (120, 220) by one or more turns in the full width direction.

5. The electrode assembly according to claim 1,
wherein a plurality of fixing tapes are fixed at symmetrical positions on the basis of a full width line on a midpoint in the full length direction of the electrode assembly.

6. The electrode assembly (10, 100, 200) according to claim 1,
wherein the fixing tape (30), 130) is wound around the outer surface of the electrode laminate (20, 110, 210) and the outer surface of the protective block (120, 220) by one or more turns in the full length direction.

7. The electrode assembly according to claim 1,
wherein a plurality of fixing tapes are fixed at symmetrical positions on the basis of a full length line on a midpoint in the full width direction of the electrode assembly.

8. The electrode assembly (10, 100, 200) according to claim 1,
wherein the electrode laminate (20, 110, 210) has a separator interposed between a positive electrode (111, 211) and a negative electrode (112, 212), and
a form in which a length in the full length direction of the electrode laminate (20, 110, 210) is longer than a length in the full width direction orthogonal to the full length direction.

## Patentansprüche

1. Elektrodenanordnung (10, 100, 200), umfassend:
ein Elektrodenlaminat (20, 110, 210);
Schutzblöcke (120, 220), welche sich um einen Randabschnitt des Elektrodenlaminats (20, 110, 210) wickeln; und
ein Fixierband (30, 130), welches in einer Gesamtbreitenrichtung oder einer Gesamtlängenrichtung um eine äußere Fläche des Elektrodenlaminats (20, 110, 210) und eine äußere Fläche des Schutzblocks (120, 220) gewunden ist,
wobei der Schutzblock (120, 220) aus einem ersten Schutzpaneel und einem zweiten Schutzpaneel hergestellt ist, welches sich von einer longitudinalen Seite des ersten Schutzpaneels vertikal erstreckt,
wobei
a) sich vier Schutzblöcke (120, 220) in der Gesamtlängenrichtung um die Randabschnitte des Elektrodenlaminats (20, 110, 210) wickeln und in der Gesamtlängenrichtung des Elektrodenlaminats (20, 110, 210) an jedem der Randabschnitte bereitgestellt sind, wobei jeder der Schutzblöcke zu einem benachbarten Schutzblock einen Trennabstand aufweist, oder
b) sich vier Schutzblöcke (120, 220) mit Ausnahme eines Elektrodenstreifens (21a, 111a, 22a, 112a) in der Gesamtbreitenrichtung des Elektrodenlaminats (20, 110, 210) um die Randabschnitte wickeln und in der Gesamtbreitenrichtung des Elektrodenlaminats (20, 110, 210) an jedem der Randabschnitte bereitgestellt sind, wobei jeder der Schutzblöcke zu einem benachbarten Schutzblock einen Trennabstand aufweist, oder
c) sich vier Schutzblöcke (120, 220) in der Gesamtlängenrichtung des Elektrodenlaminats (20, 110, 210) um die Randabschnitte wickeln und sich vier Schutzblöcke (120, 220) mit Ausnahme des Elektrodenstreifens (21a, 111a, 22a, 112a) in der Gesamtbreitenrichtung um die Randabschnitte wickeln und in der Gesamtbreitenrichtung sowie in der Gesamtbreitenrichtung des Elektrodenlaminats (20, 110, 210) an jedem der Randabschnitte bereitgestellt sind, wobei jeder der Schutzblöcke zu einem benachbarten Schutzblock einen Trennabstand aufweist.

2. Elektrodenanordnung (10, 100, 200) nach Anspruch 1,
wobei der Schutzblock (120, 220) aus wenigstens einem Material hergestellt ist, ausgewählt aus der Gruppe, bestehend aus Polyethylen, Polypropylen, Polyvinylidendifluorid, Polyethylenterephthalat, Polyimid, Ethylenvinylacetat und Acrylatstoffen.

3. Elektrodenanordnung (10, 100, 200) nach Anspruch 1,
wobei die Fixierbänder (30, 130) an einer Mehrzahl von Positionen bereitgestellt sind und angeordnet sind, um voneinander beabstandet zu sein.

4. Elektrodenanordnung (10, 100, 200) nach Anspruch 1,
wobei das Fixierband (30, 130) in der Gesamtbreitenrichtung um eine oder mehrere Windungen um die äußere Fläche des Elektrodenlaminats (20, 110, 210) und die äußere Fläche des Schutzblocks (120, 220) gewickelt ist.

5. Elektrodenanordnung nach Anspruch 1,
wobei eine Mehrzahl von Fixierbändern auf Grundlage einer Gesamtbreitenlinie an einem Mittelpunkt in der Gesamtlängenrichtung der Elektrodenanordnung an symmetrischen Positionen fixiert sind.

6. Elektrodenanordnung (10, 100, 200) nach Anspruch 1,
wobei das Fixierband (30, 130) in der Gesamtlängenrichtung um eine oder mehrere Windungen um die äußere Fläche des Elektrodenlaminats (20, 110, 210) und die äußere Fläche des Schutzblocks (120, 220) gewickelt ist.

7. Elektrodenanordnung nach Anspruch 1,
wobei eine Mehrzahl von Fixierbändern auf Grundlage einer Gesamtlängenlinie an einem Mittelpunkt in der Gesamtbreitenrichtung der Elektrodenanordnung an symmetrischen Positionen fixiert sind.

8. Elektrodenanordnung (10, 100, 200) nach Anspruch 1,
wobei das Elektrodenlaminat (20, 110, 210) einen Separator aufweist, welcher zwischen einer positiven Elektrode (111, 211) und einer negativen Elektrode (112, 212) eingefügt ist, und
wobei eine Form, bei welcher eine Länge in der Gesamtlängenrichtung des Elektrodenlaminats (20, 110, 210) länger als eine Länge in der Gesamtbreitenrichtung ist, orthogonal zu der Gesamtlängenrichtung ist.

## Revendications

1. Ensemble d'électrodes (10, 100, 200), comprenant :
un stratifié d'électrode (20, 110, 210) ;
des blocs de protection (120, 220) qui entourent une partie bord du stratifié d'électrode (20, 110, 210) ; et
une bande de fixation (30, 130) qui est enroulée autour d'une surface extérieure du stratifié d'électrode (20, 110, 210) et d'une surface extérieure du bloc de protection (120, 220) dans une direction de pleine largeur ou une direction de pleine longueur,
dans lequel le bloc de protection (120, 220) est constitué d'un premier panneau de protection, et d'un second panneau de protection s'étendant verticalement à partir d'un côté longitudinal du premier panneau de protection,
dans lequel
a) quatre blocs de protection (120, 220) entourent les parties bords du stratifié d'électrode (20, 110, 210) dans la direction de pleine longueur, et sont fournis au niveau de chacune des parties bords dans la direction de pleine longueur du stratifié d'électrode (20, 110, 210), dans lequel chacun des blocs de protection a une distance de séparation par rapport à un bloc de protection adjacent, ou
b) quatre blocs de protection (120, 220) entourent les parties bords dans la direction de pleine largeur du stratifié d'électrode (20, 110, 210) à l'exception d'une languette d'électrode (21a, 111a, 22a, 112a), et sont fournis au niveau de chacune des parties bords dans la direction de pleine largeur du stratifié d'électrode (20, 110, 210), dans lequel chacun des blocs de protection a une distance de séparation par rapport à un bloc de protection adjacent, ou
c) quatre blocs de protection (120, 220) entourent les parties bords dans la direction de pleine longueur du stratifié d'électrode (20, 110, 210) et quatre blocs de protection (120, 220) entourent les parties bords dans la direction de pleine largeur à l'exception de la languette d'électrode (21a, 111a, 22a, 112a), et sont fournis au niveau de chacune des parties bords dans la direction de pleine longueur et la direction de pleine largeur du stratifié d'électrode (20, 110, 210), dans lequel chacun des blocs de protection a une distance de séparation par rapport à un bloc de protection adjacent.

2. Ensemble d'électrodes (10, 100, 200) selon la revendication 1,
dans lequel le bloc de protection (120, 220) est fabriqué à partir d'au moins un matériau sélectionné dans le groupe constitué de composés de polyéthylène, de polypropylène, de difluorure de polyvinylidène, de polyéthylène téréphtalate, de polyimide, d'éthylène-acétate de vinyle, et d'acrylate.

3. Ensemble d'électrodes (10, 100, 200) selon la revendication 1,
dans lequel les bandes de fixation (30, 130) sont fournies à une pluralité de positions, et sont situées pour être espacées les unes des autres.

4. Ensemble d'électrodes (10, 100, 200) selon la revendication 1,
dans lequel la bande de fixation (30, 130) est enroulée autour de la surface extérieure du stratifié d'électrode (20, 110, 210) et de la surface extérieure du bloc de protection (120, 220) sur un ou plusieurs tours dans la direction de pleine largeur.

5. Ensemble d'électrodes selon la revendication 1,
dans lequel une pluralité de bandes de fixation sont fixées à des positions symétriques sur la base d'une ligne pleine largeur sur un point médian dans la direction de pleine longueur de l'ensemble d'électrodes.

6. Ensemble d'électrodes (10, 100, 200) selon la revendication 1, dans lequel la bande de fixation (30, 130) est enroulée autour de la surface extérieure du stratifié d'électrode (20, 110, 210) et de la surface extérieure du bloc de protection (120, 220) sur un ou plusieurs tours dans la direction de pleine longueur.

7. Ensemble d'électrodes selon la revendication 1,
dans lequel une pluralité de bandes de fixation sont fixées à des positions symétriques sur la base d'une ligne pleine longueur sur un point médian dans la direction de pleine largeur de l'ensemble d'électrodes.

8. Ensemble d'électrodes (10, 100, 200) selon la revendication 1,
dans lequel le stratifié d'électrode (20, 110, 210) a un séparateur interposé entre une électrode positive (111, 211) et une électrode négative (112, 212), et
une forme dans laquelle une longueur dans la direction de pleine longueur du stratifié d'électrode (20, 110, 210) est plus longue qu'une longueur dans la direction de pleine largeur orthogonale à la direction de pleine longueur.
